# EUROPEAN PATENT SPECIFICATION

(11) **EP 3 851 343 B1**
(45) Date of publication and mention of the grant of the patent: **06.03.2024**
(21) Application number: 19859113.3
(22) Date of filing: 10.09.2019
(51) Int. Cl.: B60S 5/06, G05D 1/02, B60L 53/35, B60L 53/80

(54) **TRAY EXTENSION POSITIONING METHOD AND SYSTEM**
VERFAHREN UND SYSTEM ZUR POSITIONIERUNG EINER SCHALENERWEITERUNG
PROCÉDÉ ET SYSTÈME DE POSITIONNEMENT D'EXTENSION DE PLATEAU

(30) Priority: 10.09.2018 CN 201811053013
(43) Date of publication of application: 21.07.2021
(73) Proprietor: Aulton New Energy Automotive Technology Group, Shanghai 201315 (CN)
(72) Inventor: ZHANG, Jianping, Shanghai 201315 (CN); CHEN, Zhihao, Shanghai 201315 (CN); LU, Wencheng, Shanghai 201315 (CN)
(74) Representative: Hannke Bittner & Partner mbB Regensburg
(86) International application number: PCT/CN2019/105188
(87) International publication number: WO 2020/052563

(56) References cited:
- WO-A1-2018/121746
- US-A- 5 612 606
- US-A1- 2016 318 415

## Description

### Technical Field

The present invention relates to a tray extension positioning method and system.

### Background

For battery replacement type electric vehicles, batteries need to be replaced regularly or irregularly. Generally, battery replacement equipment is fixed at a designated position, and an electric vehicle is controlled to stop near the battery replacement equipment for battery replacement. The step of battery replacement is generally that a tray of the battery replacement equipment extends out in a linear motion to be aligned with a battery supporting device on the electric vehicle, finally realizing removal of an old battery and installation of a new battery in the electric vehicle. US 5 612 606 A teaches the alignment of a battery lifting device with a vehicle in a battery exchange system for electric vehicles.

However, due to operating errors, it is difficult for the electric vehicle to stop at a position that is completely parallel to the battery replacement equipment, that is, the electric vehicle skews relative to the battery replacement equipment more or less. However, in the prior art, the tray extends out in the linear motion, which can easily cause the tray and the electric vehicle to fail in alignment, thereby resulting in a failure of battery replacement.

### Content of the present invention

The technical problem to be solved in the present invention is for overcoming the defect that a tray in extension may be possibly unable to be aligned with an electric vehicle in the prior art, and providing a tray extension positioning method and system.

The present invention solves the above technical problems through the following technical solutions.

A tray extension positioning method, characterized by including the following steps:
acquiring a first detection state of a first sensor and a second detection state of a second sensor, the first detection state being used for indicating whether the first sensor detects a first distance signal, the second detection state being used for indicating whether the second sensor detects a second distance signal, the first distance signal being used for indicating a distance between a first position of a tray and a target, the second distance signal being used for indicating a distance between a second position of the tray and the target, and the first position and the second position being disposed at an interval; and
determining the first detection state and the second detection state; if the first detection state indicates that the first distance signal is detected and the second detection state indicates that the second distance signal is detected, driving the tray to linearly move toward the target at a positioning speed; if the first detection state indicates that the first distance signal is detected and the second detection state indicates that the second distance signal is not detected, driving the tray to rotate along a rotational direction to cause the second position to move toward the target quicker than the first position; and if the first detection state indicates that the first distance signal is not detected and the second detection state indicates that the second distance signal is detected, driving the tray to rotate along a counter-rotational direction opposite to the rotational direction to cause the first position to move toward the target quicker than the second position.

Preferably, the tray extension positioning method further includes:
if the first detection state indicates that the first distance signal is not detected and the second detection state indicates that the second distance signal is not detected, driving the tray to linearly move toward the target at a traveling speed.

Preferably, the tray linearly moving toward the target at the traveling speed includes the following step:
determining whether the tray has moved a preset distance, if so, the tray linearly moving toward the target at a first traveling speed, if not, the tray linearly moving toward the target at a second traveling speed;
wherein the second traveling speed is less than the first traveling speed.

Preferably, the positioning speed is less than the first traveling speed. By the adoption of the above settings, the tray can move a preset distance at the higher first traveling speed to be close to the target, and then move at the lower second traveling speed to be close to the target, thereby saving time and not affecting the later adjustment accuracy. Meanwhile, when being further close to the target, the tray moves at the lower positioning speed to also avoid the problem of delayed adjustment caused by an extremely high speed. The positioning speed can be the same as the second traveling speed, or greater than or less than the second traveling speed.

Preferably, the tray extension positioning method further includes the following step:
after a termination instruction is received, stopping the motion of the tray.

By the adoption of the above settings, the tray can stop moving at any time point according to the termination instruction, so that the motion of the tray can be stopped in time in case of a fault or in case that the tray is in place.

Preferably, the tray extension positioning method further includes:
acquiring a third detection state of a third sensor, the third detection state being used for indicating whether the third sensor detects a third distance signal, and the third distance signal being used for indicating a distance between a third position of the tray and the target; and
determining the third detection state, and if the third detection state indicates that the third distance signal is detected, generating the termination instruction;
wherein the third position is located between the first position and the second position.

By the adoption of the above settings, when the tray moves in place, the termination instruction is generated to complete extension positioning of the tray.

Preferably, the first sensor, the second sensor and the third sensor are proximity switches. By the adoption of the above settings, a distance can be detected conveniently by the proximity switches.

Preferably, sensing distances of the first sensor and the second sensor are the same, and a sensing distance of the third sensor is less than the sensing distance of the first sensor.

Preferably, the tray extension positioning method further includes: determining whether a final limit switch arranged on the tray detects a limit position signal, and if so, generating the termination instruction. By the adoption of the above settings, when the tray moves to a set limit position, the termination instruction is generated in time to stop the motion of the tray to avoid a structural damage.

Preferably, the first sensor is fixedly arranged at the first position, and the second sensor is fixedly arranged at the second position. By the adoption of the above settings, the first sensor and the second sensor are fixed more conveniently.

A tray extension positioning system, characterized by including:
a first acquisition module used for acquiring a first detection state of a first sensor and a second detection state of a second sensor, the first detection state being used for indicating whether the first sensor detects a first distance signal, the second detection state being used for indicating whether the second sensor detects a second distance signal, the first distance signal being used for indicating a distance between a first position of the tray and a target, the second distance signal being used for indicating a distance between a second position of the tray and the target, and the first position and the second position being disposed at an interval; and
a first determination module used for determining the first detection state and the second detection state, calling a first driving module if the first detection state indicates that the first distance signal is detected and the second detection state indicates that the second distance signal is detected, calling a second driving module if the first detection state indicates that the first distance signal is detected and the second detection state indicates that the second distance signal is not detected, and calling a third driving module if the first detection state indicates that the first distance signal is not detected and the second detection state indicates that the second distance signal is detected, wherein
the first driving module is used for driving the tray to linearly move toward the target at a positioning speed;
the second driving module is used for driving the tray to rotate along a rotational direction to cause the second position to move toward the target quicker than the first position; and
the third driving module is used for driving the tray to rotate along an counter-rotational direction opposite to the rotational direction to cause the first position to move toward the target quicker than the second position.

Preferably, the tray extension positioning system further includes a fourth driving module;
the first determination module is also used for calling the fourth driving module if the first detection state indicates that the first distance signal is not detected and the second detection state indicates that the second distance signal is not detected; and
the fourth driving module is used for driving the tray to linearly move toward the target at a traveling speed.

Preferably, the first determination module includes a preset distance determination module, and the fourth driving module includes a first driving execution module and a second driving execution module;
the preset distance determination module is used for determining whether the tray has moved a preset distance in the process that the tray linearly moves toward the target at the traveling speed, if so, calling the first driving execution module, and if not, calling the second driving execution module;
the first driving execution module is used for driving the tray to linearly move toward the target at a first traveling speed;
the second driving execution module is used for driving the tray to linearly move toward the target at a second traveling speed;
wherein the second traveling speed is less than the first traveling speed;
preferably, the positioning speed is less than the first traveling speed. By the adoption of the above settings, the tray can move a preset distance at the higher first traveling speed under the driving of the first driving execution module to be close to the target, and then move at the lower second traveling speed under the driving of the second driving execution module to be close to the target, thereby saving time and not affecting the later adjustment accuracy. Meanwhile, when being further close to the target, the tray moves at the lower positioning speed under the action of the first driving module to also avoid the problem of delayed adjustment caused by an extremely high speed. The positioning speed can be the same as the second traveling speed, or greater than or less than the second traveling speed.

Preferably, the tray extension positioning system further includes:
a stop module used for stopping the motion of the tray after a termination instruction is received.

By the adoption of the above settings, the tray can stop moving at any time point under the action of the stop module, so that the motion of the tray can be stopped in case of a fault or in case that the tray is in place.

Preferably, the tray extension positioning system further includes:
a second acquisition module used for acquiring a third detection state of a third sensor, the third detection state being used for indicating whether the third sensor detects a third distance signal, and the third distance signal being used for indicating a distance between a third position of the tray and the target;
a second determination module used for determining the third detection state, and generating the termination instruction if the third detection state indicates that the third distance signal is detected; and
wherein the third position is located between the first position and the second position.

By the adoption of the above settings, when the tray moves in place, the second determination module generates the termination instruction to complete extension positioning of the tray.

Preferably, the first sensor, the second sensor and the third sensor are proximity switches. By the adoption of the above settings, a distance can be detected conveniently by the proximity switches.

Preferably, sensing distances of the first sensor and the second sensor are the same, and a sensing distance of the third sensor is less than the sensing distance of the first sensor.

Preferably, the tray extension positioning system further includes:
a third determination module used for determining whether a final limit switch arranged on the tray detects a limit position signal, and if so, generating the termination instruction.

By the adoption of the above settings, when the tray moves to a set limit position, the termination instruction is generated in time to stop the motion of the tray to avoid a structural damage.

Preferably, the first sensor is fixedly arranged at the first position, and the second sensor is fixedly arranged at the second position. By the adoption of the above settings, the first sensor and the second sensor are fixed more conveniently.

On the basis of satisfying common knowledge in the art, all the above preferred conditions can be combined optionally to obtain all the preferred examples of the present invention.

The present invention has the following positive progressive results:
in the tray extension positioning method and system disclosed by the present invention, by means of the first sensor and the second sensor, as well as the first acquisition module and the first determination module, distances from the first position and the second position of the tray to the target can be determined, thereby determining whether the tray is aligned with the target; and if so, the tray can continue to linearly move, if not, the tray can rotate to be aligned with the target, thus avoiding a failure of battery replacement.

### Brief description of the drawings

Figure 1 is a flow diagram of one part of a tray extension positioning method of Embodiment 1 of the present invention.
Figure 2 is a flow diagram of the other part of a tray extension positioning method of Embodiment 1 of the present invention.
Figure 3 is a flow diagram of a tray extension positioning process in one case of Embodiment 1 of the present invention.
Figure 4 is a flow diagram of a tray extension positioning process in another case of Embodiment 1 of the present invention.
Figure 5 is a flow diagram of a tray extension positioning process in yet another case of Embodiment 1 of the present invention.
Figure 6 is a block diagram of a tray extension positioning system of Embodiment 2 of the present invention.
Figure 7 is a schematic structural diagram of a tray, a first sensor, a second sensor, and a third sensor of Embodiment 2 of the present invention.

### Descriptions of reference numerals in the drawings:

10: tray extension positioning system; 110: first acquisition module; 120: second acquisition module; 210: first determination module; 211: preset distance determination module; 220: second determination module; 230: third determination module; 310: first driving module; 320: second driving module; 330: third driving module; 340: fourth driving module; 341: first driving execution module; 342: second driving execution module; 400: stop module; 20: tray; 31: first sensor; 32: second sensor; 33: third sensor.

### Detailed description of the preferred embodiment

### Embodiment 1

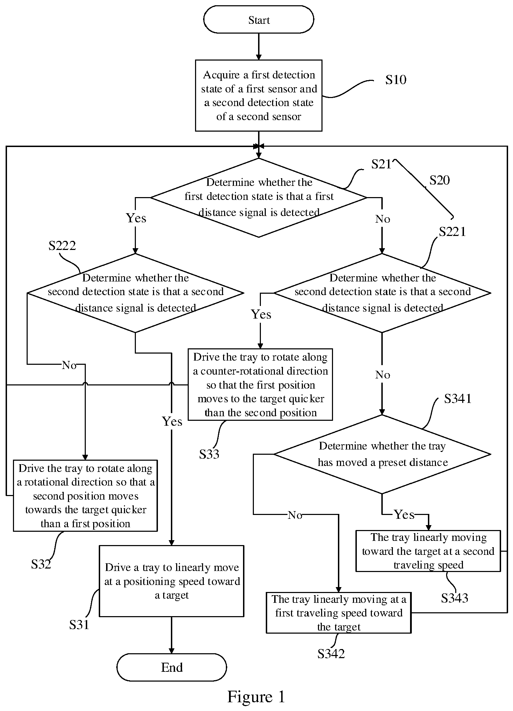

As shown in Figs. 1 to 5, the present embodiment discloses a tray extension positioning method. As shown in Figure 1, the tray extension positioning method includes the following steps.

Step S10, a first detection state of a first sensor and a second detection state of a second sensor are acquired. The first detection state is used for indicating whether the first sensor detects a first distance signal, and the second detection state is used for indicating whether the second sensor detects a second distance signal. The first distance signal is used for indicating a distance between a first position of the tray and a target, and the second distance signal is used for indicating a distance between a second position of the tray and the target. The first position and the second position are disposed at an interval.

Step S20, the first detection state and the second detection state are determined (specifically, step S21, the first detection state is determined, and step S221/S222, the second detection state is determined). If the first detection state indicates that the first distance signal is detected and the second detection state indicates that the second distance signal is detected, step S31 is executed: the tray is driven to linearly move toward the target at a positioning speed. If the first detection state indicates that the first distance signal is detected and the second detection state indicates that the second distance signal is not detected, step S32 is executed: the tray is driven to rotate along a rotational direction to cause the second position to move toward the target quicker than the first position. If the first detection state indicates that the first distance signal is not detected and the second detection state indicates that the second distance signal is detected, step S33 is executed: the tray is driven to rotate along a counter-rotational direction opposite to the rotational direction to cause the first position to move toward the target quicker than the second position.

According to the above, by means of the first sensor and the second sensor, distances from the first position and the second position of the tray to the target can be determined, thereby determining whether the tray is aligned with the target; and if so, the tray can continue to linearly move, and if not, the tray can rotate to be aligned with the target, thus avoiding a failure of battery replacement.

In the present embodiment, in Figure 1, in order to facilitate illustration, the step S21 is executed at first, i.e., the first detection state is determined at first, and the step S221/S222 is then executed, i.e., the second detection state is then determined. In an alternative embodiment, the second detection state can be determined before the determination of the first detection state, or the first detection state and the second detection state can be determined simultaneously.

In addition, as shown in Figure 1, the tray extension positioning method further includes that if the first detection state indicates that the first distance signal is not detected and the second detection state indicates that the second distance signal is not detected, the tray is driven to linearly move toward the target at a traveling speed. Specifically, in the present embodiment, the traveling speed includes a first traveling speed and a second traveling speed. As shown in Figure 1, the tray linearly moving toward the target at the traveling speed includes the following steps: step S341, whether the tray has moved a preset distance is determined; if not, the step S342 is executed: the tray linearly moves toward the target at the first traveling speed; and if so, step S343 is executed: the tray linearly moves toward the target at the second traveling speed. The second traveling speed is less than the first traveling speed. The positioning speed is less than the first traveling speed. In this way, the tray can move a preset distance at the higher first traveling speed to be close to the target, and then move at the lower second traveling speed to be close to the target, thereby saving time and not affecting the later adjustment accuracy. Meanwhile, when being further close to the target, the tray moves at the lower positioning speed to also avoid the problem of delayed adjustment caused by an extremely high speed. The positioning speed can be the same as the second traveling speed, or greater than or less than the second traveling speed. In an alternative embodiment, the traveling speed may not be divided into the first traveling speed and the second traveling speed, and may be a constant speed.

In addition, as shown in Figure 1, after the step S32, the step S33, the step S342, and the step S343 are completed, the step S21 is executed again.

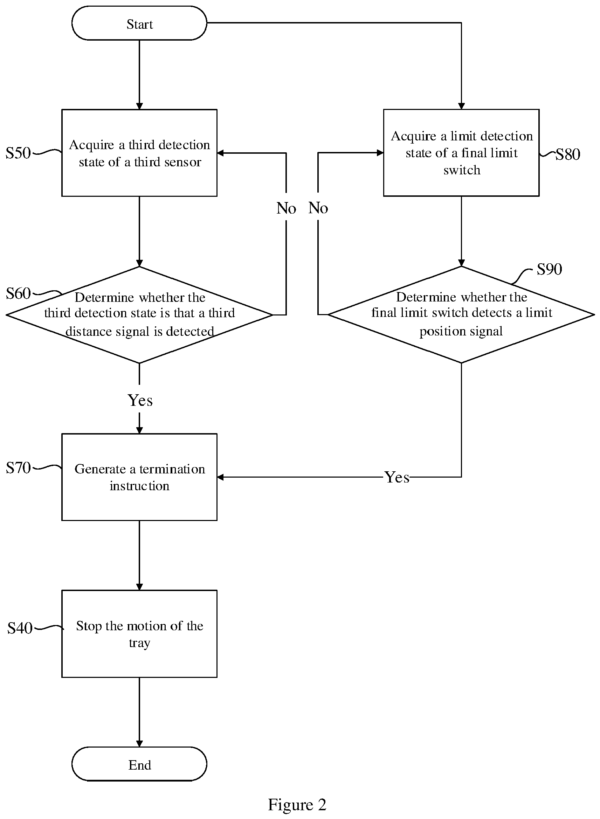

In addition, as shown in Figure 2, the tray extension positioning method further includes the following steps: after a termination instruction is received, step S40 is executed: the motion of the tray is stopped. In this way, the tray can stop moving at any time point according to the termination instruction, so that the motion of the tray can be stopped in time in case of a fault or in case that the tray is in place.

Specifically, the tray extension positioning method further includes the following steps.

Step S50, a third detection state of a third sensor is acquired. The third detection state is used for indicating whether the third sensor detects a third distance signal. The third distance signal is used for indicating a distance between a third position of the tray and the target.

Step S60, the third detection state is determined. If the third detection state indicates that the third distance signal is detected, step S70 is executed: the termination instruction is generated. If the third detection state indicates that the third distance signal is not detected, the step S60 continues to be executed. The third position is located between the first position and the second position. In this way, when the tray moves in place, the termination instruction is generated to complete extension positioning of the tray. After the step S70, the step S40 is executed.

In addition, in the present embodiment, the first sensor, the second sensor and the third sensor are proximity switches. A distance can be detected conveniently by the proximity switches. Sensing distances of the first sensor and the second sensor are the same, and a sensing distance of the third sensor is less than the sensing distance of the first sensor. For example, the sensing distances of the first sensor and the second sensor may be 30 mm, and the sensing distance of the third sensor may be 15 mm; or the sensing distances of the first sensor and the second sensor may be 15 mm, and the sensing distance of the third sensor may be 5 mm. The first detection state indicates that the first distance signal is detected when the distance between the first sensor and the target is within the sensing distance of the first sensor; and the first detection state indicates that the first distance signal is not detected when the distance between the first sensor and the target is not within the sensing distance of the first sensor. The second sensor and the third sensor are similar to the first sensor.

In an alternative embodiment, the first sensor, the second sensor and the third sensor may also be distance sensors of other types, such as a laser distance sensor. In this way, the first sensor, the second sensor and the third sensor may output specific distance numerical values. At the moment, the first detection state indicates that the first distance signal is detected when the distance between the first sensor and the target is within a set first threshold range (e.g., ≤30 mm); and the first detection state indicates that the first distance signal is not detected when the distance between the first sensor and the target is not within the set first threshold range. The second sensor is the same as the first sensor; the second detection state indicates that the second distance signal is detected when the distance between the second sensor and the target is within a set second threshold range (e.g., ≤30 mm); and the second detection state indicates that the second distance signal is not detected when the distance between the second sensor and the target is not within the set second threshold range. The third sensor is similar to the second sensor; the third detection state indicates that the third distance signal is detected when the distance between the third sensor and the target is within a set third threshold range (e.g., ≤ 15 mm); and the third detection state indicates that the third distance signal is not detected when the distance between the third sensor and the target is not within the set third threshold range.

As shown in Figure 2 again, the tray extension positioning method further includes: step S90, whether a final limit switch of the tray detects a limit position signal is determined. If so, the step S70 is executed: the termination instruction is generated. Of course, before the step S90, a detection state of the final limit switch is inevitably acquired, i.e., the following steps are included: step S80, a limit detection state of the final limit switch is acquired. In addition, in the step S90, if the final limit switch arranged on the tray does not detect the limit position signal, the step S80 is executed again. In this way, when the tray moves to a set limit position, the termination instruction is generated in time to stop the motion of the tray to avoid a structural damage.

In the present embodiment, the first sensor is fixedly arranged at the first position, and the second sensor is fixedly arranged at the second position. Meanwhile, the third sensor is fixedly arranged at the third position. In an alternative embodiment, one or more of the first sensor, the second sensor and the third sensor may also be fixedly on the target to also detect the distance between the corresponding position of the tray and the target.

In the present embodiment, the first sensor, the second sensor, the third sensor and the final limit switch all carry out real-time monitoring, i.e., carry out continuous monitoring in the operation process of the tray. In addition, those skilled in the art should understand that for the sake of illustration only, the tray extension positioning method is as shown in Figure 1 and Figure 2. Those skilled in the art should understand that no matter what the detection results of the first sensor and the second sensor are, once the termination instruction is generated, the step S40 is executed: the motion of the tray is stopped.

In the present embodiment, the tray is used for carrying a battery, which is a part of battery replacement equipment. The target is a battery supporting device on an electric vehicle. In an alternative embodiment, the tray extension positioning method is also applicable to cases where any other trays need to be aligned with a target.

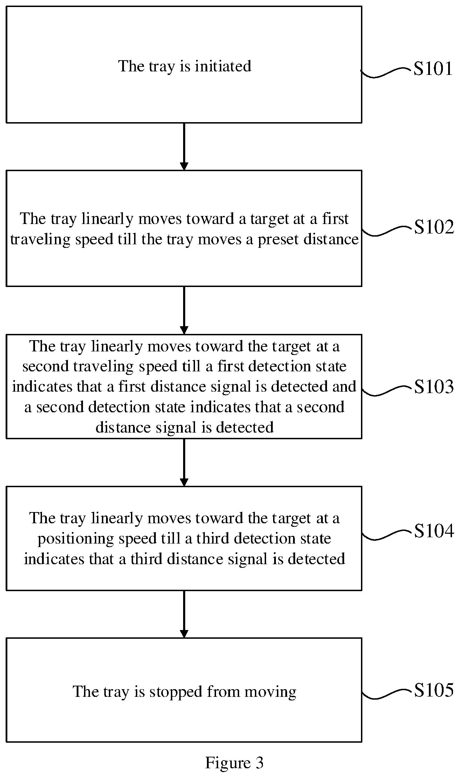

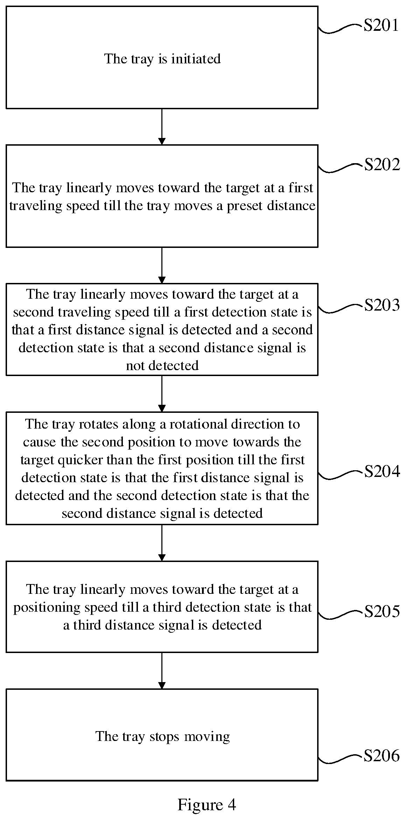

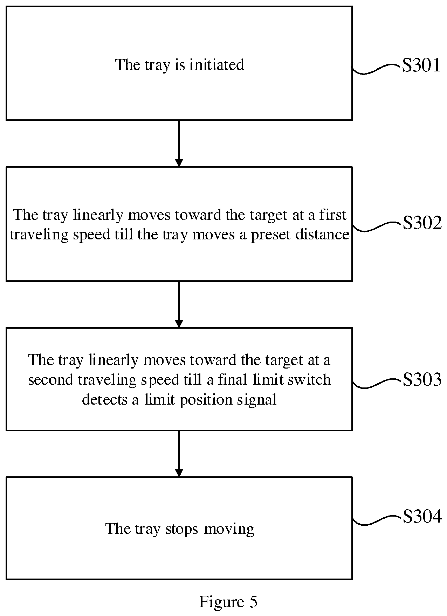

In addition, in order to illustrate this solution more clearly, three cases are specifically selected to introduce an extension positioning process of the tray.
1) As shown in Figure 3, in the case that the tray normally extends out without skewing, a tray extension process includes the following steps: step S101, the tray is initiated; step S102, the tray linearly moves toward the target at the first traveling speed till the tray moves a preset distance; step S103, the tray linearly moves toward the target at the second traveling speed till the first detection state indicates that the first distance signal is detected and the second detection state indicates that the second distance signal is detected; step S104, the tray linearly moves toward the target at the positioning speed till the third detection state indicates that the third distance signal is detected; and step S 105, the motion of the tray is stopped.
2) As shown in Figure 4, in the case that the tray normally extends out and skews to cause the first position to get closer to the target, the tray extension process includes the following steps: step S201, the tray is initiated; step S202, the tray linearly moves toward the target at the first traveling speed till the tray moves the preset distance; step S203, the tray linearly moves toward the target at the second traveling speed till the first detection state indicates that the first distance signal is detected and the second detection state indicates that the second distance signal is not detected; step S204, the tray rotates along the rotational direction to cause the second position to move toward the target quicker than the first position till the first detection state indicates that the first distance signal is detected and the second detection state indicates that the second distance signal is detected; step S205, the tray linearly moves toward the target at the positioning speed till the third detection state indicates that the third distance signal is detected; and step S206, the tray stops moving.
3) As shown in Figure 5, in the case that the tray normally extends out, but is too far away from the target, the tray extension process includes the following steps: step S301, the tray is initiated; step S302, the tray linearly moves toward the target at the first traveling speed till the tray moves the preset distance; step S303, the tray linearly moves toward the target at the second traveling speed till the final limit switch detects the limit position signal; and step S304, the motion of the tray is stopped.

Those skilled in the art should understand that Figs. 3 to 5 are several cases listed only for the purpose of illustration.

### Embodiment 2

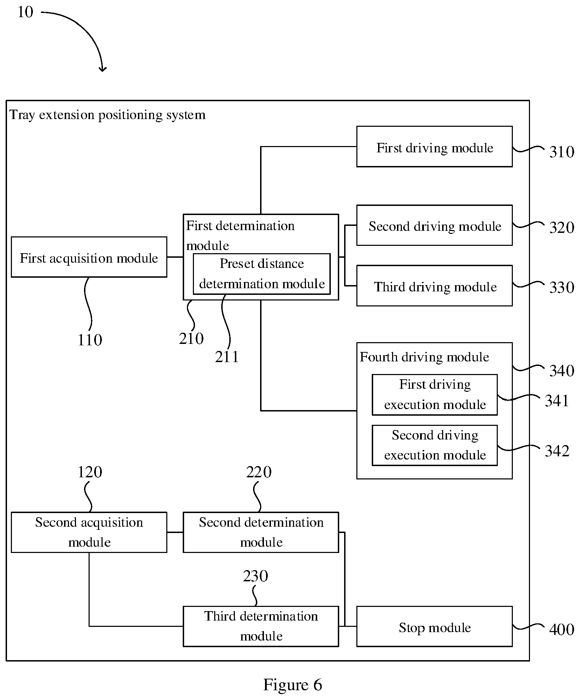

As shown in Figs. 6 to 7, the present embodiment discloses a tray extension positioning system 10, including: a first acquisition module 110, a first determination module 210, a first driving module 310, a second driving module 320, and a third driving module 330.

The first acquisition module 110 is used for acquiring a first detection state of a first sensor 31 and a second detection state of a second sensor 32. The first detection state is used for indicating whether the first sensor 31 detects a first distance signal, and the second detection state is used for indicating whether the second sensor 32 detects a second distance signal. The first distance signal is used for indicating a distance between a first position of a tray 20 and a target, and the second distance signal is used for indicating a distance between a second position of the tray 20 and the target. The first position and the second position are disposed at an interval.

The first determination module 210 is used for determining the first detection state and the second detection state. If the first detection state indicates that the first distance signal is detected and the second detection state indicates that the second distance signal is detected, the first driving module 310 is called. If the first detection state indicates that the first distance signal is detected and the second detection state indicates that the second distance signal is not detected, the second driving module 320 is called. If the first detection state indicates that the first distance signal is not detected and the second detection state indicates that the second distance signal is detected, the third driving module 330 is called.

The first driving module 310 is used for driving the tray 20 to linearly move toward the target at a positioning speed.

The second driving module 320 is used for driving the tray 20 to rotate along a rotational direction to cause the second position to move toward the target quicker than the first position.

The third driving module 330 is used for driving the tray 20 to rotate along a counter-rotational direction opposite to the rotational direction to cause the first position to move toward the target quicker than the second position.

According to the above, by means of the first acquisition module 110 and the second acquisition module 210, distances from the first position and the second position of the tray 20 to the target can be determined, thereby determining whether the tray 20 is aligned with the target; and if so, the tray can continue to linearly move, and if not, the tray can rotate to be aligned with the target, thus avoiding a failure of battery replacement.

In the present embodiment, as shown in Figure 6, the tray extension positioning system 10 further includes a fourth driving module 340. The first determination module 210 is also used for calling the fourth driving module 340 if the first detection state indicates that the first distance signal is not detected and the second detection state indicates that the second distance signal is not detected. The fourth driving module 340 is used for driving the tray 20 to linearly move toward the target at a traveling speed.

In addition, as shown in Figure 6, the first determination module 210 includes a preset distance determination module 211. The fourth driving module 340 includes a first driving execution module 341 and a second driving execution module 342. The preset distance determination module 211 is used for determining whether the tray 20 has moved a preset distance in the process that the tray 20 linearly moves toward the target at the traveling speed; if not, calling the first driving execution module 341; and if so, calling the second driving execution module 342. The first driving execution module 341 is used for driving the tray 20 to linearly move toward the target at a first traveling speed. The second driving execution module 342 is used for driving the tray 20 to linearly move toward the target at a second traveling speed. The second traveling speed is less than the first traveling speed. The positioning speed is less than the first traveling speed. In this way, the tray 20 can move a preset distance at the higher first traveling speed under the driving of the first driving execution module 341 to be close to the target, and then move at the lower second traveling speed under the driving of the second driving execution module 342 to be close to the target, thereby saving time and not affecting the later adjustment accuracy. Meanwhile, when being further close to the target, the tray moves at the lower positioning speed under the action of the first driving module 310 to also avoid the problem of delayed adjustment caused by an extremely high speed. The positioning speed can be the same as the second traveling speed, or greater than or less than the second traveling speed.

In addition, in the present embodiment, the tray extension positioning system 10 further includes: a stop module 400. The stop module 400 is used for stopping the motion of the tray 20 after a termination instruction is received. In this way, the tray 20 can stop moving at any time point under the action of the stop module 400, so that the motion of the tray 20 can be stopped in time in case of a fault or in case that the tray 20 is in place.

At the same time, as shown in Figure 6, the tray extension positioning system 10 further includes: a second acquisition module 120 and a second determination module 220. The second acquisition module 120 is used for acquiring a third detection state of a third sensor 33. The third detection state is used for indicating whether the third sensor 33 detects a third distance signal. The third distance signal is used for indicating a distance between a third position of the tray 20 and the target. The second determination module 220 is used for determining the third detection state, and generating the termination instruction if the third detection state indicates that the third distance signal is detected. The third position is located between the first position and the second position. In this way, when the tray 20 moves in place, the second determination module 220 generates the termination instruction to complete extension positioning of the tray 20.

In addition, in the present embodiment, the first sensor 31, the second sensor 32 and the third sensor 33 are all proximity switches. In this way, a distance can be conveniently detected. Specifically, sensing distances of the first sensor 31 and the second sensor 32 are the same, and a sensing distance of the third sensor 33 is less than the sensing distance of the first sensor 31.

In addition, as shown in Figure 6, the tray extension positioning system 10 further includes a third determination module 230. The third determination module 230 is used for determining whether a final limit switch arranged on the tray 20 detects a limit position signal, and generating the termination instruction if the final limit switch detects a limit position signal. When the tray 20 moves to a set limit position, the termination instruction is generated in time to stop the motion of the tray 20 to avoid a structural damage. In the present embodiment, the second acquisition module 120 is also used for acquiring a limit detection state of the final limit switch of the tray 20. In an alternative embodiment, a third acquisition module may be additionally arranged, and the third acquisition module is used for acquiring the limit detection state of the final limit switch of the tray.

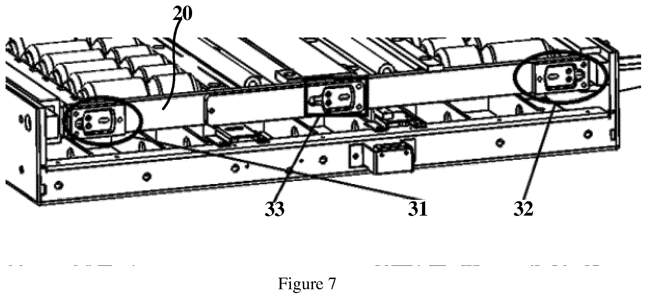

In the present embodiment, as shown in Figure 7, the first sensor 31 is fixedly arranged at the first position, and the second sensor 32 is fixedly arranged at the second position. The tray extension positioning system 10 of Embodiment 2 may be used for realizing the tray extension positioning method in Embodiment 1. A working process of the tray extension positioning system 10 may refer to specific description of Embodiment 1.

## Claims

1. A tray extension positioning method, ensuring that a tray of a battery replacement equipment will be aligned with a target when extending, **characterized by** comprising the following steps:
acquiring a first detection state of a first sensor (31) and a second detection state of a second sensor (32), the first detection state being used for indicating whether the first sensor (31) detects a first distance signal, the second detection state being used for indicating whether the second sensor (32) detects a second distance signal, the first distance signal being used for indicating a distance between a first position of a tray (20) and a target, the second distance signal being used for indicating a distance between a second position of the tray (20) and the target, and the first position and the second position being disposed at an interval; and
determining the first detection state and the second detection state; if the first detection state indicates that the first distance signal is detected and the second detection state indicates that the second distance signal is detected, driving the tray (20) to linearly move toward the target at a positioning speed; if the first detection state indicates that the first distance signal is detected and the second detection state indicates that the second distance signal is not detected, driving the tray (20) to rotate along a rotational direction to cause the second position to move toward the target quicker than the first position; and if the first detection state indicates that the first distance signal is not detected and the second detection state indicates that the second distance signal is detected, driving the tray (20) to rotate along a counter-rotational direction opposite to the rotational direction to cause the first position to move toward the target quicker than the second position.

2. The tray extension positioning method according to claim 1, **characterized by** further comprising:
if the first detection state indicates that the first distance signal is not detected and
the second detection state indicates that the second distance signal is not detected, driving the tray (20) to linearly move toward the target at a traveling speed.

3. The tray extension positioning method according to claim 2, **characterized in that** the tray (20) linearly moving toward the target at the traveling speed comprises the following steps:
determining whether the tray (20) has moved a preset distance, if not, the tray (20) linearly moving toward the target at a first traveling speed, and if so, the tray (20) linearly moving toward the target at a second traveling speed;
wherein the second traveling speed is less than the first traveling speed; and
preferably, the positioning speed is less than the first traveling speed.

4. The tray extension positioning method according to at least one of claims 1-3, **characterized by** further comprising the following step:
after a termination instruction is received, stopping the motion of the tray (20).

5. The tray extension positioning method according to claim 4, **characterized by** further comprising:
acquiring a third detection state of a third sensor (33), the third detection state being used for indicating whether the third sensor (33) detects a third distance signal, and the third distance signal being used for indicating a distance between a third position of the tray (20) and the target;
determining the third detection state, and if the third detection state indicates that the third distance signal is detected, generating the termination instruction;
wherein the third position is located between the first position and the second position;
preferably, the first sensor (31), the second sensor (32) and the third sensor (33) are proximity switches;
preferably, sensing distances of the first sensor (31) and the second sensor (32) are the same, and a sensing distance of the third sensor (33) is less than the sensing distance of the first sensor (31).

6. The tray extension positioning method according to claim 4 or 5, **characterized by** further comprising: determining whether a final limit switch arranged on the tray (20) detects a limit position signal, and if the final limit switch detects the limit position signal, generating the termination instruction.

7. The tray extension positioning method according to at least one of claims 1-6, wherein the first sensor (31) is fixedly arranged at the first position, and the second sensor (32) is fixedly arranged at the second position.

8. A tray extension positioning system (10), ensuring that a tray of a battery replacement equipment will be aligned with a target when extending, **characterized by** comprising:
a first acquisition module (110) used for acquiring a first detection state of a first sensor (31) and a second detection state of a second sensor (32), the first detection state being used for indicating whether the first sensor (31) detects a first distance signal, the second detection state being used for indicating whether the second sensor (32) detects a second distance signal, the first distance signal being used for indicating a distance between a first position of a tray (20) and a target, the second distance signal being used for indicating a distance between a second position of the tray (20) and the target, and the first position and the second position being disposed at an interval;
a first determination module (210) used for determining the first detection state and
the second detection state, calling a first driving module (310) if the first detection state indicates that the first distance signal is detected and the second detection state indicates that the second distance signal is detected, calling a second driving module (320) if the first detection state indicates that the first distance signal is detected and the second detection state indicates that the second distance signal is not detected, and calling a third driving module (330) if the first detection state indicates that the first distance signal is not detected and the second detection state indicates that the second distance signal is detected;
the first driving module used for driving the tray (20) to linearly move toward the target at a positioning speed;
the second driving module (320) used for driving the tray (20) to rotate along a rotational direction to cause the second position to move toward the target quicker than the first position;
the third driving module (330) used for driving the tray (20) to rotate along a counter-rotational direction opposite to the rotational direction to cause the first position to move toward the target quicker than the second position.

9. The tray extension positioning system (10) according to claim 8, **characterized by** further comprising: a fourth driving module (340), wherein
the first determination module is also used for calling the fourth driving module (340) if the first detection state indicates that the first distance signal is not detected and the second detection state indicates that the second distance signal is not detected;
the fourth driving module (340) is used for driving the tray (20) to linearly move toward the target at a traveling speed.

10. The tray extension positioning system (10) according to claim 9, **characterized in that** the first determination module comprises a preset distance determination module (211), and the fourth driving module (340) comprises a first driving execution module (341) and a second driving execution module (342);
the preset distance determination module (211) is used for determining whether the tray has moved a preset distance in the process that the tray (20) linearly moves toward the target at the traveling speed, if not, calling the first driving execution module (341), and if so, calling the second driving execution module (342);
the first driving execution module (341) is used for driving the tray (20) to linearly move toward the target at a first traveling speed;
the second driving execution module (342) is used for driving the tray (20) to linearly move toward the target at a second traveling speed;
wherein the second traveling speed is less than the first traveling speed;
preferably, the positioning speed is less than the first traveling speed.

11. The tray extension positioning system (10) according to at least one of claims 8-10, **characterized by** further comprising:
a stop module (400) used for stopping the motion of the tray (20) after a termination instruction is received.

12. The tray extension positioning system (10) according to claim 11, **characterized by** further comprising:
a second acquisition module (120) used for acquiring a third detection state of a third sensor (33), the third detection state being used for indicating whether the third sensor (33) detects a third distance signal, and the third distance signal being used for indicating a distance between a third position of the tray (20) and the target;
a second determination module (220) used for determining the third detection state, and generating the termination instruction if the third detection state indicates that the third distance signal is detected;
wherein the third position is located between the first position and the second position;
preferably, the first sensor (31), the second sensor (32) and the third sensor (33) are proximity switches; and
preferably, sensing distances of the first sensor (31) and the second sensor (32) are the same, and a sensing distance of the third sensor (33) is less than the sensing distance of the first sensor (31).

13. The tray extension positioning system (10) according to claim 11 or 12, **characterized by** further comprising:
a third determination module (230) used for determining whether a final limit switch arranged on the tray (20) detects a limit position signal, and if so, generating the termination instruction.

14. The tray extension positioning system (10) according to at least one of claims 8-13, **characterized in that** the first sensor (31) is fixedly arranged at the first position, and the second sensor (32) is fixedly arranged at the second position.

## Patentansprüche

1. Verfahren zur Positionierung einer Trägererweiterung, das sicherstellt, dass ein Träger einer Batteriewechseleinrichtung bei der Erweiterung an ein Ziel ausgerichtet wird, **dadurch gekennzeichnet, dass** es die folgenden Schritte umfasst:
Erfassen eines ersten Erfassungszustands eines ersten Sensors (31) und eines zweiten Erfassungszustands eines zweiten Sensors (32), wobei der erste Erfassungszustand dazu dient, anzuzeigen, ob der erste Sensor (31) ein erstes Abstandssignal erkennt, wobei der zweite Erfassungszustand dazu dient, anzuzeigen, ob der zweite Sensor (32) ein zweites Abstandssignal erkennt, das erste Abstandssignal dazu verwendet wird, einen Abstand zwischen einer ersten Position eines Trägers (20) und einem Ziel anzuzeigen, das zweite Abstandssignal dazu dient, einen Abstand zwischen einer zweiten Position des Trägers (20) und dem Ziel anzuzeigen, und die erste Position und die zweite Position in einem Intervall angeordnet sind; und
Bestimmen des ersten Erfassungszustands und des zweiten Erfassungszustands; wenn der erste Erfassungszustand anzeigt, dass das erste Abstandssignal erkannt wird, und der zweite Erfassungszustand anzeigt, dass das zweite Abstandssignal erkannt wird, Antreiben des Trägers (20), um sich mit einer Positionierungsgeschwindigkeit linear auf das Ziel zuzubewegen; wenn der erste Erfassungszustand anzeigt, dass das erste Abstandssignal erkannt wird, und der zweite Erfassungszustand anzeigt, dass das zweite Abstandssignal nicht erkannt wird, Antreiben des Trägers (20), um sich entlang einer Drehrichtung zu drehen, um zu bewirken, dass sich die zweite Position schneller auf das Ziel zubewegt als die erste Position; und wenn der erste Erfassungszustand anzeigt, dass das erste Entfernungssignal nicht erkannt wird, und der zweite Erfassungszustand anzeigt, dass das zweite Entfernungssignal erkannt wird, Antreiben des Trägers (20) zu einer Drehung entlang einer Gegendrehrichtung, die der Drehrichtung entgegengesetzt ist, um zu bewirken, dass sich die erste Position schneller als die zweite Position auf das Ziel zu bewegt.

2. Verfahren zur Positionierung der Trägererweiterung nach Anspruch 1, **dadurch gekennzeichnet, dass** es ferner umfasst:
wenn der erste Erfassungszustand anzeigt, dass das erste Abstandssignal nicht erfasst wird, und der zweite Erfassungszustand anzeigt, dass das zweite Abstandssignal nicht erfasst wird, Antreiben des Trägers (20), damit es sich mit einer Fahrgeschwindigkeit linear auf das Ziel zu bewegt.

3. Verfahren zur Positionierung einer Trägererweiterung nach Anspruch 2, **dadurch gekennzeichnet, dass** der Träger (20), der sich mit der Fahrgeschwindigkeit linear auf das Ziel zu bewegt, die folgenden Schritte umfasst:
Bestimmen, ob der Träger (20) eine vorgegebene Strecke zurückgelegt hat, wenn nicht, lineares Bewegen des Trägers (20) in Richtung des Ziels mit einer ersten Fahrgeschwindigkeit, und wenn ja, lineares Bewegen des Trägers (20) in Richtung des Ziels mit einer zweiten Fahrgeschwindigkeit;
wobei die zweite Fahrgeschwindigkeit geringer ist als die erste Fahrgeschwindigkeit; und
vorzugsweise ist die Positioniergeschwindigkeit geringer als die erste Fahrgeschwindigkeit.

4. Verfahren zur Positionierung der Trägererweiterung nach wenigstens einem der Ansprüche 1 bis 3, **dadurch gekennzeichnet, dass** es außerdem den folgenden Schritt umfasst:
nach Erhalt einer Beendigungsanweisung wird die Bewegung des Trägers (20) gestoppt.

5. Verfahren zur Positionierung der Trägererweiterung nach Anspruch 4, **dadurch gekennzeichnet, dass** es ferner umfasst:
Erfassen eines dritten Erfassungszustands eines dritten Sensors (33), wobei der dritte Erfassungszustand dazu verwendet wird, anzugeben, ob der dritte Sensor (33) ein drittes Abstandssignal erkennt, und das dritte Abstandssignal dazu verwendet wird einen Abstand zwischen einer dritten Position des Trägers (20) und dem Ziel anzugeben;
Bestimmen des dritten Erkennungszustands, und wenn der dritte Erkennungszustand anzeigt, dass das dritte Entfernungssignal erkannt wurde, Erzeugen der Beendigungsanweisung;
wobei die dritte Position zwischen der ersten Position und der zweiten Position angeordnet ist;
vorzugsweise sind der erste Sensor (31), der zweite Sensor (32) und der dritte Sensor (33) Näherungsschalter;
vorzugsweise sind die Erfassungsabstände des ersten Sensors (31) und des zweiten Sensors (32) gleich, und der Erfassungsabstand des dritten Sensors (33) ist geringer als der Erfassungsabstand des ersten Sensors (31).

6. Verfahren zum Positionieren einer Trägererweiterung nach Anspruch 4 oder 5, **dadurch gekennzeichnet, dass** es ferner umfasst: Bestimmen, ob ein an dem Träger (20) angeordneter Endschalter ein Endpositionssignal erfasst, und wenn der Endschalter das Endpositionssignal erfasst, Erzeugen der Beendigungsanweisung.

7. Verfahren zur Positionierung einer Trägererweiterung nach wenigstens einem der Ansprüche 1-6, wobei der erste Sensor (31) fest an der ersten Position und der zweite Sensor (32) fest an der zweiten Position angeordnet ist.

8. Positioniersystem (10) zum Erweitern eines Trägers, das sicherstellt, dass ein Träger einer Batteriewechseleinrichtung bei der Erweiterung an ein Ziel ausgerichtet wird, **dadurch gekennzeichnet, dass** es umfasst:
ein erstes Erfassungsmodul (110), das zum Erfassen eines ersten Erfassungszustands eines ersten Sensors (31) und eines zweiten Erfassungszustands eines zweiten Sensors (32) verwendet wird, wobei der erste Erfassungszustand dazu dient, anzuzeigen, ob der erste Sensor (31) ein erstes Abstandssignal erfasst, wobei der zweite Erfassungszustand dazu dient, anzuzeigen, ob der zweite Sensor (32) ein zweites Abstandssignal erfasst, das erste Abstandssignal dazu dient einen Abstand zwischen einer ersten Position eines Trägers (20) und einem Ziel anzuzeigen, das zweite Abstandssignal dazu dient, einen Abstand zwischen einer zweiten Position des Trägers (20) und dem Ziel, anzuzeigen, und die erste Position und die zweite Position in einem Intervall angeordnet sind;
ein erstes Bestimmungsmodul (210), das dazu dient, den ersten Erfassungszustand und den zweiten Erfassungszustand zu bestimmen, ein erstes Ansteuermodul (310) aufzurufen, wenn der erste Erfassungszustand anzeigt, dass das erste Abstandssignal erkannt wird, und der zweite Erfassungszustand anzeigt, dass das zweite Abstandssignal er wird, ein zweites Ansteuermodul (320) aufzurufen, wenn der erste Erfassungszustand anzeigt, dass das erste Abstandssignal erkannt wird, und der zweite Erfassungszustand anzeigt, dass das zweite Abstandssignal nicht erkannt wird, und ein drittes Ansteuermodul (330) aufzurufen, wenn der erste Erfassungszustand anzeigt, dass das erste Abstandssignal nicht erkannt wird, und der zweite Erfassungszustand anzeigt, dass das zweite Abstandssignal erkannt wird;
das erste Antriebsmodul dazu dient, den Träger (20) so anzutreiben, dass sich der Träger mit einer Positioniergeschwindigkeit linear auf das Ziel zu bewegt;
das zweite Antriebsmodul (320) dazu dient, den Träger (20) so anzutreiben, dass sich der Träger (20) entlang einer Drehrichtung dreht, um zu bewirken, dass sich die zweite Position schneller als die erste Position auf das Ziel zu bewegt;
das dritte Antriebsmodul (330), das dazu dient, den Träger (20) so anzutreiben, dass es sich der Träger in einer zur Drehrichtung entgegengesetzten Richtung dreht, um zu bewirken, dass sich die erste Position schneller als die zweite Position auf das Ziel zu bewegt.

9. Positioniersystem (10) zum Erweitern eines Trägers nach Anspruch 8, **dadurch gekennzeichnet, dass** es ferner umfasst: ein viertes Antriebsmodul (340), wobei
das erste Bestimmungsmodul auch zum Aufrufen des vierten Ansteuermoduls (340) dient, wenn der erste Erfassungszustand anzeigt, dass das erste Abstandssignal nicht erkannt wird, und der zweite Erfassungszustand anzeigt, dass das zweite Abstandssignal nicht erkannt wird;
das vierte Antriebsmodul (340) dazu dient, den Träger (20) so anzutreiben, dass sich der Träger mit einer Fahrgeschwindigkeit linear auf das Ziel zubewegt.

10. Positioniersystem (10) zum Erweitern eines Trägers nach Anspruch 9, **dadurch gekennzeichnet, dass** das erste Bestimmungsmodul ein Modul (211) zur Bestimmung des voreingestellten Abstands umfasst, und das vierte Antriebsmodul (340) ein erstes Antriebsausführungsmodul (341) und ein zweites Antriebsausführungsmodul (342) umfasst;
das Modul (211) zur Bestimmung des voreingestellten Abstands dazu dient, um zu bestimmen, ob der Träger einen voreingestellten Abstand in dem Prozess zurückgelegt hat, in dem sich der Träger (20) mit der Fahrgeschwindigkeit linear auf das Ziel zubewegt, wenn nicht, wird das erste Antriebsausführungsmodul (341) aufgerufen, und wenn ja, wird das zweite Antriebsausführungsmodul (342) aufgerufen;
das erste Antriebsausführungsmodul (341) dazu dient, den Träger (20) anzutreiben, damit sich der Träger mit einer ersten Fahrgeschwindigkeit linear auf das Ziel zu bewegt;
das zweite Antriebsausführungsmodul (342) dazu dient, den Träger (20) anzutreiben, damit sich der Träger mit einer zweiten Fahrgeschwindigkeit linear auf das Ziel zubewegt;
wobei die zweite Fahrgeschwindigkeit geringer ist als die erste Fahrgeschwindigkeit;
vorzugsweise ist die Positioniergeschwindigkeit geringer als die erste Fahrgeschwindigkeit.

11. Positioniersystem (10) zum Erweitern eines Trägers nach wenigstens einem der Ansprüche 8-10, **dadurch gekennzeichnet, dass** es ferner umfasst:
ein Stoppmodul (400), das dazu dient, die Bewegung des Trägers (20) nach Erhalt einer Beendigungsanweisung anzuhalten.

12. Positioniersystem (10) zum Erweitern eines Trägers nach Anspruch 11, **dadurch gekennzeichnet, dass** es ferner umfasst:
ein zweites Erfassungsmodul (120), das zum Erfassen eines dritten Erfassungszustands eines dritten Sensors (33) dient, wobei der dritte Erfassungszustand dazu dient, anzuzeigen, ob der dritte Sensor (33) ein drittes Abstandssignal erkennt, und das dritte Abstandssignal dazu dient einen Abstand zwischen einer dritten Position des Trägers (20) und dem Ziel anzuzeigen;
ein zweites Bestimmungsmodul (220), das dazu dient den dritten Erfassungszustands zu bestimmen und die Beendigungsanweisung zu erzeugen, wenn der dritte Erfassungszustand anzeigt, dass das dritte Abstandssignal erkannt wird;
wobei die dritte Position zwischen der ersten Position und der zweiten Position angeordnet ist;
vorzugsweise sind der erste Sensor (31), der zweite Sensor (32) und der dritte Sensor (33) Näherungsschalter; und
vorzugsweise sind die Erfassungsabstände des ersten Sensors (31) und des zweiten Sensors (32) gleich, und ein Erfassungsabstand des dritten Sensors (33) ist geringer als der Erfassungsabstand des ersten Sensors (31).

13. Positioniersystem (10) zum Erweitern eines Trägers nach Anspruch 11 oder 12, **dadurch gekennzeichnet, dass** es ferner umfasst:
ein drittes Bestimmungsmodul (230), das dazu dient, zu bestimmen, ob ein auf dem Träger (20) angeordneter Endschalter ein Endpositionssignal erfasst, und wenn ja, die Beendigungsanweisung zu erzeugen.

14. Positioniersystem (10) zum Erweitern eines Trägers nach wenigstens einem der Ansprüche 8-13, **dadurch gekennzeichnet, dass** der erste Sensor (31) fest an der ersten Position und der zweite Sensor (32) fest an der zweiten Position angeordnet ist.

## Revendications

1. Procédé de positionnement d'extension de plateau garantissant qu'un plateau d'un équipement de remplacement de batterie sera aligné avec une cible lors de l'extension, **caractérisé en ce qu'**il comprend les étapes suivantes :
d'obtention d'un premier état de détection d'un premier capteur (31) et d'un deuxième état de détection d'un deuxième capteur (32), le premier état de détection étant utilisé pour indiquer si le premier capteur (31) détecte un premier signal de distance, le deuxième état de détection étant utilisé pour indiquer si le deuxième capteur (32) détecte un deuxième signal de distance, le premier signal de distance étant utilisé pour indiquer une distance entre une première position d'un plateau (20) et une cible, le deuxième signal de distance étant utilisé pour indiquer une distance entre une deuxième position du plateau (20) et la cible, et la première position et la deuxième position étant disposées à un intervalle donné ; et
la détermination du premier état de détection et du deuxième état de détection ; si le premier état de détection indique que le premier signal de distance est détecté et si le deuxième état de détection indique que le deuxième signal de distance est détecté, l'entraînement du déplacement linéaire du plateau (20) vers la cible à une vitesse de positionnement ; si le premier état de détection indique que le premier signal de distance est détecté et si le deuxième état de détection indique que le deuxième signal de distance n'est pas détecté, l'entraînement de la rotation du plateau (20) le long d'une direction de rotation pour déclencher le déplacement de la deuxième position vers la cible plus rapidement que la première position ; et si le premier état de détection indique que le premier signal de distance n'est pas détecté et si le deuxième état de détection indique que le deuxième signal de distance est détecté, l'entraînement de la rotation du plateau (20) le long d'une direction de contre-rotation opposée à la direction de rotation pour déclencher le déplacement de la première position vers la cible plus rapidement que la deuxième position.

2. Procédé de positionnement d'extension de plateau selon la revendication 1, **caractérisé en ce qu'**il comprend en outre :
si le premier état de détection indique que le premier signal de distance n'est pas détecté et si le deuxième état de détection indique que le deuxième signal de distance n'est pas détecté, le déclenchement du déplacement linéaire du plateau (20) vers la cible à une vitesse de déplacement.

3. Procédé de positionnement d'extension de plateau selon la revendication 2, **caractérisé en ce que** le déplacement linéaire du plateau (20) vers la cible à la vitesse de déplacement comprend les étapes suivantes :
de détermination si le plateau (20) a parcouru une distance prédéfinie, dans le cas contraire, le déplacement linéaire du plateau (20) vers la cible à une première vitesse de déplacement, et si tel est le cas, le déplacement linéaire du plateau (20) vers la cible à une deuxième vitesse de déplacement ;
dans lequel la deuxième vitesse de déplacement est inférieure à la première vitesse de déplacement ; et
de manière préférée la vitesse de positionnement est inférieure à la première vitesse de déplacement.

4. Procédé de positionnement d'extension de plateau selon au moins l'une quelconque des revendications 1 - 3, **caractérisé en ce qu'**il comprend en outre l'étape suivante :
après la réception d'une instruction de fin, l'arrêt du déplacement du plateau (20).

5. Procédé de positionnement d'extension de plateau selon la revendication 4, **caractérisé en ce qu'**il comprend en outre :
l'obtention d'un troisième état de détection d'un troisième capteur (33), le troisième état de détection étant utilisé pour indiquer si le troisième capteur (33) détecte un troisième signal de distance, et le troisième signal de distance étant utilisé pour indiquer une distance entre une troisième position du plateau (20) et la cible ;
la détermination du troisième état de détection, et si le troisième état de détection indique que le troisième signal de distance est détecté, la génération de l'instruction de fin ;
dans lequel la troisième position est située entre la première position et la deuxième position ;
de manière préférée le premier capteur (31), le deuxième capteur (32) et le troisième capteur (33) sont des commutateurs de proximité ;
de préférence, des distances de détection du premier capteur (31) et du deuxième capteur (32) sont les mêmes, et une distance de détection du troisième capteur (33) est inférieure à la distance de détection du premier capteur (31).

6. Procédé de positionnement d'extension de plateau selon la revendication 4 ou 5, **caractérisé en ce qu'**il comprend en outre : la détermination si un commutateur de limite final disposé sur le plateau (20) détecte un signal de position limite, et si le commutateur de limite final détecte le signal de position limite, la génération de l'instruction de fin.

7. Procédé de positionnement d'extension de plateau selon au moins l'une quelconque des revendications 1 - 6, dans lequel le premier capteur (31) est disposé de manière fixe sur la première position, et le deuxième capteur (32) est disposé de manière fixe sur la deuxième position.

8. Système de positionnement d'extension de plateau (10) garantissant qu'un plateau d'un équipement de remplacement de batterie sera aligné avec une cible lors de l'extension, **caractérisé en ce qu'**il comprend :
un premier module d'obtention (110) utilisé pour obtenir un premier état de détection d'un premier capteur (31) et un deuxième état de détection d'un deuxième capteur (32), le premier état de détection étant utilisé pour indiquer si le premier capteur (31) détecte un premier signal de distance, le deuxième état de détection étant utilisé pour indiquer si le deuxième capteur (32) détecte un deuxième signal de distance, le premier signal de distance étant utilisé pour indiquer une distance entre une première position d'un plateau (20) et une cible, le deuxième signal de distance étant utilisé pour indiquer une distance entre une deuxième position du plateau (20) et la cible, et la première position et la deuxième position étant disposées à un intervalle donné ;
un premier module de détermination (210) utilisé pour déterminer le premier état de détection et le deuxième état de détection, pour appeler un premier module d'entraînement (310) si le premier état de détection indique que le premier signal de distance est détecté et si le deuxième état de détection indique que le deuxième signal de distance est détecté, pour appeler un deuxième module d'entraînement (320) si le premier état de détection indique que le premier signal de distance est détecté et si le deuxième état de détection indique que le deuxième signal de distance n'est pas détecté, et pour appeler un troisième module d'entraînement (330) si le premier état de détection indique que le premier signal de distance n'est pas détecté et le deuxième état de détection indique que le deuxième signal de distance est détecté ;
le premier module d'entraînement étant utilisé pour entraîner le déplacement linéaire du plateau (20) vers la cible à une vitesse de positionnement ;
le deuxième module d'entraînement (320) étant utilisé pour entraîner la rotation du plateau (20) le long d'une direction de rotation pour déclencher le déplacement de la deuxième position vers la cible plus rapidement que la première position ;
le troisième module d'entraînement (330) étant utilisé pour entraîner la rotation du plateau (20) le long d'une direction de contre-rotation opposée à la direction de rotation pour déclencher le déplacement de la première position vers la cible plus rapidement que la deuxième position.

9. Système de positionnement d'extension de plateau (10) selon la revendication 8, **caractérisé en ce qu'**il comprend en outre : un quatrième module d'entraînement (340), dans lequel
le premier module de détermination est utilisé également pour appeler le quatrième module d'entraînement (340) si le premier état de détection indique que le premier signal de distance n'est pas détecté et si le deuxième état de détection indique que le deuxième signal de distance n'est pas détecté ;
le quatrième module d'entraînement (340) est utilisé pour entraîner le déplacement linéaire du plateau (20) vers la cible à une vitesse de déplacement.

10. Système de positionnement d'extension de plateau (10) selon la revendication 9, **caractérisé en ce que** le premier module de détermination comprend un module de détermination de distance prédéfinie (211), et le quatrième module d'entraînement (340) comprend un premier module d'exécution d'entraînement (341) et un deuxième module d'exécution d'entraînement (342) ;
le module de détermination de distance prédéfinie (211) est utilisé pour déterminer si le plateau a parcouru une distance prédéfinie quand le plateau (20) se déplace linéairement vers la cible à la vitesse de déplacement, et dans le cas contraire, pour appeler le premier module d'exécution d'entraînement (341), et si tel est le cas, pour appeler le deuxième module d'exécution d'entraînement (342) ;
le premier module d'exécution d'entraînement (341) est utilisé pour entraîner le déplacement linéaire du plateau (20) vers la cible à une première vitesse de déplacement ;
le deuxième module d'exécution d'entraînement (342) est utilisé pour entraîner le déplacement linéaire du plateau (20) vers la cible à une deuxième vitesse de déplacement ;
dans lequel la deuxième vitesse de déplacement est inférieure à la première vitesse de déplacement ;
de manière préférée, la vitesse de positionnement est inférieure à la première vitesse de déplacement.

11. Système de positionnement d'extension de plateau (10) selon au moins l'une quelconque des revendications 8 - 10, **caractérisé en ce qu'**il comprend en outre :
un module d'arrêt (400) utilisé pour arrêter le déplacement du plateau (20) après la réception d'une instruction de fin.

12. Système de positionnement d'extension de plateau (10) selon la revendication 11, **caractérisé en ce qu'**il comprend en outre :
un deuxième module d'obtention (120) utilisé pour obtenir un troisième état de détection d'un troisième capteur (33), le troisième état de détection étant utilisé pour indiquer si le troisième capteur (33) détecte un troisième signal de distance, et le troisième signal de distance étant utilisé pour indiquer une distance entre une troisième position du plateau (20) et la cible ;
un deuxième module de détermination (220) utilisé pour déterminer le troisième état de détection, et la génération de l'instruction de fin si le troisième état de détection indique que le troisième signal de distance est détecté ;
dans lequel la troisième position est située entre la première position et la deuxième position ;
de manière préférée, le premier capteur (31), le deuxième capteur (32) et le troisième capteur (33) sont des commutateurs de proximité ; et
de manière préférée des distances de détection du premier capteur (31) et du deuxième capteur (32) sont les mêmes, et une distance de détection du troisième capteur (33) est inférieure à la distance de détection du premier capteur (31).

13. Système de positionnement d'extension de plateau (10) selon la revendication 11 ou 12, **caractérisé en ce qu'**il comprend en outre :
un troisième module de détermination (230) utilisé pour déterminer si un commutateur de limite final disposé sur le plateau (20) détecte un signal de position limite, et si tel est le cas, pour générer l'instruction de fin.

14. Système de positionnement d'extension de plateau (10) selon au moins l'une quelconque des revendications 8 - 13, **caractérisé en ce que** le premier capteur (31) est disposé de manière fixe sur la première position, et le deuxième capteur (32) est disposé de manière fixe sur la deuxième position.
